# EUROPÄISCHE PATENTSCHRIFT

(11) **EP 3 390 267 B1**
(45) Veröffentlichungstag und Bekanntmachung des Hinweises auf die Patenterteilung: **14.04.2021**
(21) Anmeldenummer: 16795058.3
(22) Anmeldetag: 14.11.2016
(51) Int. Cl.: B67C 3/20, B67C 3/28, B67C 3/04

(54) **FÜLLEINRICHTUNG**
FILLING DEVICE
DISPOSITIF DE REMPLISSAGE

(30) Priorität: 16.12.2015 DE 102015122033
(43) Veröffentlichungstag der Anmeldung: 24.10.2018
(73) Patentinhaber: KHS GmbH, 44143 Dortmund (DE)
(72) Erfinder: CLÜSSERATH, Ludwig, 55543 Bad Kreuznach (DE); KRULITSCH, Dieter-Rudolf, 55545 Bad Kreuznach (DE)
(86) Internationale Anmeldenummer: PCT/EP2016/077551
(87) Internationale Veröffentlichungsnummer: WO 2017/102195

(56) Entgegenhaltungen:
- EP-A2- 0 090 664
- WO-A2-2010/112143
- DE-A1-102013 106 927
- DE-B4-102006 014 103

## Beschreibung

Die vorliegende Erfindung betrifft eine Fülleinrichtung zum Abfüllen von Flüssigkeiten, insbesondere Getränken. Die Fülleinrichtung hat eine Produktzufuhr und einen mit der Produktzufuhr verbundenen Produktkanal, der in eine Abgabeöffnung mündet. In dem Produktkanal ist ein Füll- und Regelventil angeordnet, zu welchem angrenzend ein Durchflussmesser angeordnet ist. Im Bereich der Abgabeöffnung ist eine Gassperre angeordnet, die verhindert, dass Gas, insbesondere Luft von unten in den Gaskanal eindringt. Das Füll- und Regelventil ist durch einen im Produktkanal zentrisch angeordneten Ventilkörper und einen diesen umgebenden Ventilsitz gebildet. Die axiale Stellung des Ventilkörpers und des Ventilsitzes relativ zueinander, insbesondere in Richtung des Produktkanals sind steuerbar, um die Flüssigkeit in einen unterhalb der Abgabeöffnung bestehenden Behälter abzufüllen.

Eine Fülleinrichtung dieser gattungsgemäßen Art ist aus der DE 10 2006 014 103 B4 bekannt. Bei dieser bekannten Fülleinrichtung ist der Ventilsitz am Anfang des Produktkanals angeordnet, wo er an die Produktzufuhr angrenzt. Auf diese Weise wird dort ein definierter Ventilsitz geschaffen. Diese bekannte Fülleinrichtung funktioniert einwandfrei, ist jedoch hinsichtlich ihrer designtechnischen Möglichkeiten eingeschränkt

Aus der DE 10 2013 106 927 A1 ist eine Fülleinrichtung gemäß dem Oberbegriff des Anspruchs 1 bekannt.

Es ist daher Aufgabe der Erfindung, eine Fülleinrichtung der eingangs genannten Art zu schaffen, die hinsichtlich der Anordnung ihrer Komponenten variabler ist.

Diese Aufgabe wird erfindungsgemäß durch eine Fülleinrichtung gemäß Anspruch 1 gelöst. Vorteilhafte Weiterbildungen der Erfindung sind Gegenstand der abhängigen Ansprüche. Weiterbildungen und Ausführungsformen der Erfindung sind ebenfalls in der Beschreibung und in den Zeichnungen offenbart.

Erfindungsgemäß ist der Ventilsitz in axialer Richtung des Produktkanals verstellbar und der Ventilsitz ist mit dem Produktkanal über beidseitig des Ventilsitzes angeordnete, längenverstellbare Verbindungselemente verbunden. Die Erfindung ermöglicht es, den Ventilsitz unabhängig von der Position der Produktzufuhr, z.B. eines Produktzufuhrraumes, anzuordnen und ist damit in seiner Gestaltung sehr viel variabler als die bekannte Fülleinrichtung. Durch die Tatsache, dass der Ventilsitz über beidseitig, d.h. ein darunterliegendes Verbindungselement mit dem Produktkanal verbunden ist, kann die axiale Position des Ventilsitzes beliebig gewählt werden, was eine erhöhte Freiheit bei der Gestaltung der Maschine eröffnet.

Vorzugsweise sind die Verbindungselemente durch einen ersten und einen zweiten Faltenbalg gebildet, die einen Teil der Wand des Produktkanals bilden. Faltenbalge haben den Vorteil, dass sie die Längenänderung, die mit der axialen Verstellung des Ventilsitzes verbunden ist, mühelos mitmachen und dass sie andererseits eine glatte Innenfläche des Produktkanals bilden, der einer Anlagerung von Produkten wirkungsvoll entgegensteht. Ein Faltenbalg ist somit ein sehr wirkungsvolles Mittel, um effektiv und hygienisch die axial verstellbare Anordnung des Ventilsitzes im Produktkanal sicherzustellen.

Vorzugsweise besteht der erste und zweite Faltenbalg aus Teflon oder ist damit beschichtet. Auch dieses Merkmal unterstützt die Hygiene und verhindert Produktablagerungen an der Innenwand des Faltenbalgs, die ja die Innenwand des Produktkanals bildet.

In einer vorteilhaften Weiterbildung der Erfindung sind die Faltenbalge und der Ventilsitz durch ein integriertes flexibles Wandelement gebildet. Dies hat den Vorteil, dass keine Übergänge zwischen den beiden Faltenbalgen und dem Ventilsitz ausgebildet sind, an welchem sich Produkt anhaften könnte. Durch die integrierte Ausbildung der beiden Faltenbalge mit dem Ventilsitz wird somit eine durchgehende Innenfläche geschaffen, an der sich das abzufüllende Produkt nur sehr schwer festsetzen kann. Diese Ausführungsform erfüllt somit höchste Hygieneanforderungen. Das flexible Wandelement besteht insbesondere aus einem ringförmigen Ventilsitzabschnitt, dem sich beidseitig Faltenbalgabschnitte anschließen.

Bei der Öffnung und dem Schließen des Füll- und Regelventils gibt es zwei Möglichkeiten. Entweder wird für einen Füllvorgang die axiale Stellung des Ventilkörpers relativ zum Ventilsitz gesteuert, oder die axiale Stellung des Ventilkörpers ist konstant und die axiale Stellung des Ventilsitzes wird für den Füllvorgang gesteuert. Selbstverständlich kann sowohl eine Bewegungssteuerung des Ventilkörpers als auch des Ventilsitzes vorgesehen sein, wobei dies jedoch die Steuerung der Fülleinrichtung eher komplizierter gestaltet. Vorzugsweise ist durch die axiale Verstellbarkeit des Ventilkörpers und des Ventils relativ zueinander der Öffnungsquerschnitt des Füll- und Regelventils steuerbar, um somit dem Abfüllverhalten unterschiedlicher Getränke Rechnung tragen zu können, als auch der Öffnungs- und Schließvorgang des Ventils.

Durch die Tatsache, dass der Durchflussmesser nach dem Füll- und Regelventil angeordnet ist, wird die abzufüllende Menge durch den Durchflussmesser sehr gut erfasst und kann für die Steuerung des Füllvorgangs, z.B. für die Steuerung des Stellelements für den Ventilkörper und/oder den Ventilsitz verwendet werden. Das gleiche Prinzip läßt sich in analoger Weise erreichen, wenn die Anordnung des Regelventils zum Durchflussmesser in umgekehrter Reihenfolge realisiert wird. Durch die Tatsache, dass zudem in der Abgabeöffnung eine Gassperre angeordnet ist, wird vermieden, dass Luft aus der Umgebung durch die Abgabeöffnung in den Produktkanal aufsteigt und dort zu einer Verfälschung der im Durchflussmesser ermittelten Werte führt.

Vorzugsweise ist der Durchflussmesser durch einen magnetisch induktiven Durchflussmesser (MID) gebildet. Der Vorteil dieses Durchflussmessers ist, dass er ohne Kontakt mit dem Produkt auskommt, was wiederum eine sehr hygienische Durchflussmessung garantiert. Vorzugsweise umgibt der magnetisch induktive Durchflussmesser den Produktkanal, um auf diese Weise sehr wirkungsvoll die gesamte Menge des den Produktkanal vor der Abgabeöffnung durchfließenden Produkts erfassen zu können.

Vorzugsweise ist der Ventilkörper durch einen Ventilkegel gebildet. Ein derartiger Ventilkörper regelt den Öffnungsquerschnitt des Füll- und Regelventils sanft auf und zu und minimiert dabei eine Verwirbelung des Produkts beim Durchströmen des Füll-und Regelventils.

Vorzugsweise ist die axiale Stellung des Ventilkörpers in dem Produktkanal steuerbar, um hierdurch die abzufüllende Produktmenge zu regeln bzw. zu steuern. Der Ventilkörper lässt sich über die Ventilstange mittels des Stellelements leicht steuern, z.B. über eine Kulissensteuerung einer Füllmaschine, die mehrere Fülleinrichtungen umfasst, die z.B. auf einem Kreisel angeordnet sind.

In einer bevorzugten Ausführungsform der Erfindung ist der Ventilsitz durch eine Feder gegen einen Anschlag vorgespannt. Dies hat den Vorteil, dass beim Schließen des Regel- und Füllventils der Ventilsitz in Schließrichtung gegen den Federdruck nachgeben kann, womit ein sanftes Schließen erzielt wird. Die Dichtflächen des Füll-und Regelventils werden somit nicht überbeansprucht und auch Produktverwirbelungen am Füll- und Regelventil werden minimiert.

Die Erfindung betrifft ebenfalls eine Füllmaschine, die eine Vielzahl der vorstehend beschriebenen Fülleinrichtungen umfasst, die vorzugsweise auf einem Kreisel angeordnet sind, so dass insgesamt eine Rundfüllmaschine gebildet wird.

Diese Füllmaschine umfasst vorzugsweise eine Kulissensteuerung zur Bestätigung wenigstens eines Stellelements jeder Fülleinrichtung. Dieses Stellelement ist z.B. dazu geeignet, die axiale Stellung des Ventilkörpers und/oder des Ventilsitzes zu beeinflussen. Durch das Stellelement kann z.B. ein Betätigungselement mit einem voreingestellten Hub betätigt werden, das wiederum den Ventilsitz in axialer Richtung betätigt. Das Betätigungselement kann ebenfalls einen Stellantrieb aufweisen, welcher wiederum gesteuert über den MID betätigbar ist, um somit jeden Füllvorgang individuell nachregeln zu können. Während somit über das Stellelement immer ein konstanter Hub des Regel- und Füllventils realisiert wird, kann über das Betätigungselement bei jedem Füllvorgang eine individuelle Komponente eingeregelt werden.

Die Erfindung wird nun beispielsweise anhand der schematischen Zeichnung beschrieben. In dieser zeigen:
- Fig. 1: eine teilgeschnittene Seitenansicht einer ersten Ausführungsform einer Fülleinrichtung mit axial verstellbarem Ventilkörper;
- Fig. 2: eine Ansicht gemäß Fig. 1 einer zweiten Ausführungsform der Erfindung mit axial verstellbarem Ventilsitz;
- Fig. 3: eine Ansicht gemäß Fig. 1 einer dritten Ausführungsform gemäß Fig. 2 mit integriert ausgebildeten Faltenbalgen und Ventilsitz;
- Fig. 4: eine Ansicht gemäß Fig. 1 einer vierten Ausführungsform gemäß Fig. 3 mit axial anders positioniertem Ventilkörper;
- Fig. 5: eine Ansicht gemäß Fig. 1 einer fünften Ausführungsform gemäß Fig. 3 mit einem in der Mündung des Produktkanals gehaltenen Ventilkörper in einer Position gemäß Fig. 4; und
- Fig. 6: zeigt eine weitere Ausführungsform, bei welcher für die zur Fig. 5 analoge Fülleinrichtung eine unterschiedliche Anordnung des Durchflussmessers vorgesehen ist.

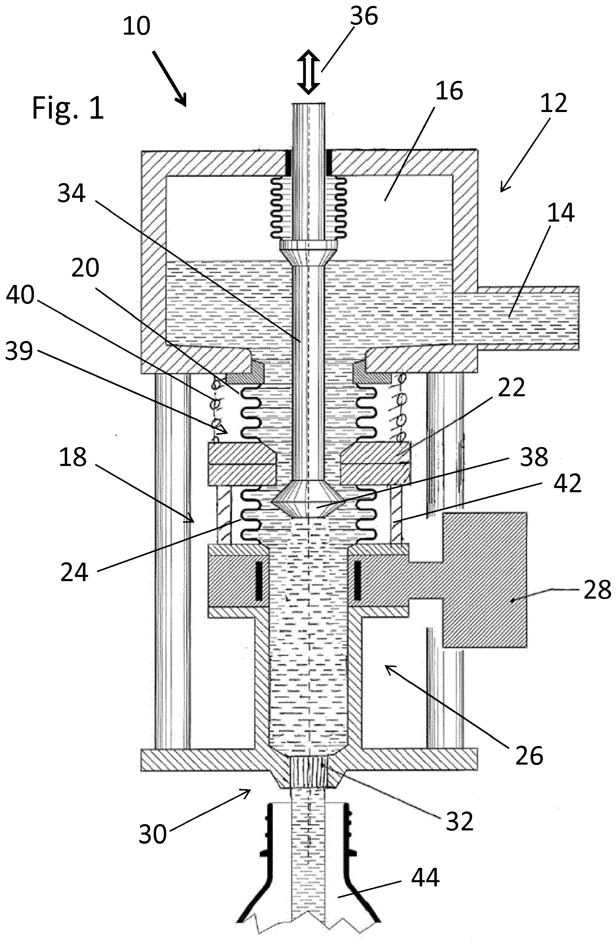

Fig. 1 zeigt eine Fülleinrichtung 10 umfassend eine Produktzufuhr 12 bestehend aus einem Produktzufuhrkanal 14, der in einen, insbesondere zylindrischen, Produktraum 16 mündet. An den Produktraum 16 schließt sich nach unten ein Produktkanal 18 an, der durch einen ersten Faltenbalg 20, einen Ventilsitz 22, einen zweiten Faltenbalg 24 und einen zylindrischen unteren Produktkanalabschnitt 26 gebildet wird, in welchem ein magnetisch induktiver Durchflussmesser (MID) 28 integriert ist. Der untere Produktkanalabschnitt 26 endet in einer Abgabeöffnung 30, in welcher eine Gassperre 32 eingesetzt ist, die verhindert, dass Umgebungsluft über die Abgabeöffnung 30 in den Produktkanal 18 eintreten kann. Gassperren sind an sich im Stand der Technik bekannt. In dem Produktkanal ist zentrisch eine Ventilstange 34 gehalten, welche über ein Ventilkörper-Stellelement 36 in axialer Richtung betätigbar ist. Am Ende der Ventilstange 34 ist ein Ventilkörper 38 gehalten, der in der Form eines gegenläufig ausgebildeten Doppelkegels ausgebildet ist. Dieser Ventilkörper 38 wirkt mit dem Ventilsitz 22 als ein Füll- und Regelventil 39 zusammen. Der Ventilsitz 22 ist mittels einer Feder, genau genommen einer Druckschraubenfeder 40 gegen einen Anschlagsring 42 vorgespannt, der vorzugsweise auf dem unteren Produktkanalabschnitt 26 aufliegt. Die Durchflussöffnung des Füll- und Regelventils 22, 38 wird über das Stellelement gesteuert, wobei die axiale Tiefe der Auslenkung den freien Öffnungsquerschnitt des Füll- und Regelventils 39 bestimmt. Beim Schließen des Füll- und Regelventils 39 bewegt sich der Ventilkörper 38 nach oben, wobei der Ventilsitz 22 leicht gegen die Kraft der Druckfeder 40 auslenkt, womit ein sanftes Schließen des Regel- und Füllventils 39 sichergestellt wird, dass die miteinander zusammenwirkenden Dichtflächen an dem Ventilsitz 22 und an dem Ventilkörper 38 schont. Des Weiteren werden durch dieses sanfte Zusammenwirken Verwirbelungen des Produktes vermieden, die die Fallgeschwindigkeit reduzieren. Das Produkt fließt durch den hydrostatischen Druck des Produkts im Produktraum 16 nach unten durch den Produktkanal 18 durch die Abgabeöffnung 32 in einen Behälter 44, z.B. eine Flasche. Die abgefüllte Menge wird dabei durch den MID 28 erfasst, der ggf. auf die axiale Betätigung der Ventilstange 34 und des Ventilkörpers 38 Einfluss nehmen kann, um die abgefüllte Durchflussmenge auf einen Sollwert einzuregeln. Die Fülleinrichtung ermöglicht eine variable, einfache und unkomplizierte, volumengenaue Befüllung von beliebigen Behältern 44.

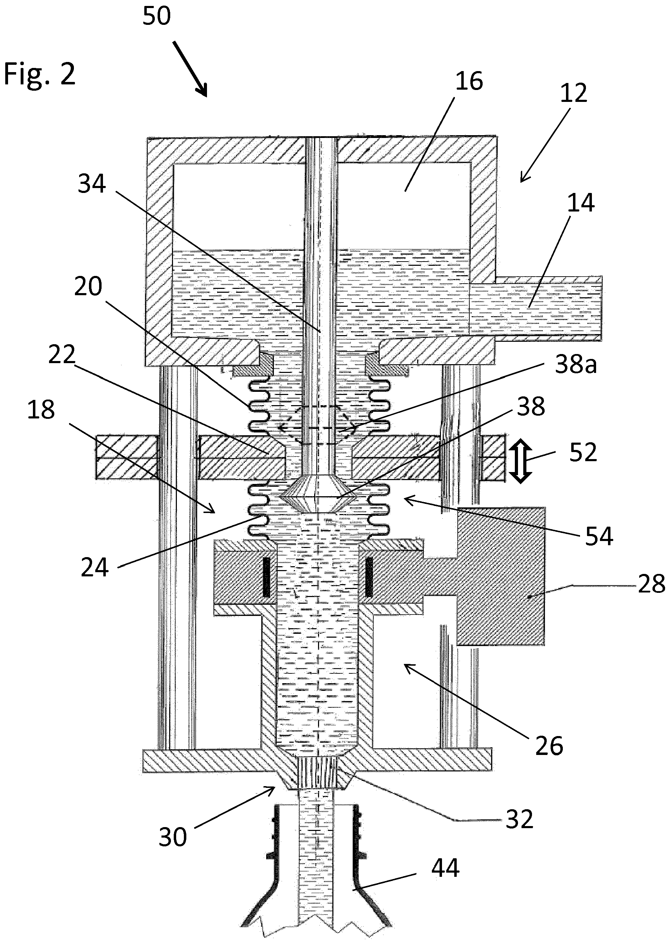

In allen Figuren werden identische oder funktionsgleiche Elemente mit den identischen Bezugszeichen versehen. Das Ausführungsbeispiel 50 der Fig. 2 unterscheidet sich von der Ausführungsform der Fig. 1 darin, dass hier die Ventilstange 34 und der Ventilkörper 38 axial fest in der Fülleinrichtung gehalten sind, z.B. mit der Produktzufuhr 12 verbunden sind. In dieser Ausführungsform wird somit der Ventilsitz 22 über das Ventilsitz-Stellelement 52 axial verstellt, so dass das Füll- und Regelventil 54 durch den axial festen Ventilkörper 38 und den über das Ventilsitz-Stellelement 52 axial verstellbaren Ventilsitz 22 gebildet sind. In der Figur ist gestrichelt eine alternative Anordnung des Ventilsitzes mit dem Bezugszeichen 38a gekennzeichnet, in welchem Fall der Ventilkörper 38a oberhalb des Ventilsitzes angeordnet ist. Beide Anordnungen des Ventilkörpers 38, 38a relativ zum Ventilsitz 22 sind möglich. Sie unterscheiden sich lediglich durch die Bewegungsrichtung des Ventilkörper-Stellements 36. Das Ventilsitz-Stellelement 52 der Fig. 2 kann über eine Kulisse einer Füllmaschine steuerbar sein, die eine Vielzahl der vorstehend gezeigten Fülleinrichtungen enthält, und zusätzlich über ein Betätigungselement, das über den magnetisch induktiven Durchflussmesser 28 angesteuert wird, um somit die Füllmenge bei jedem einzelnen Füllvorgang oder tendenzmäßig über die Zeit auf einen vorgegebenen Sollwert einzuregeln.

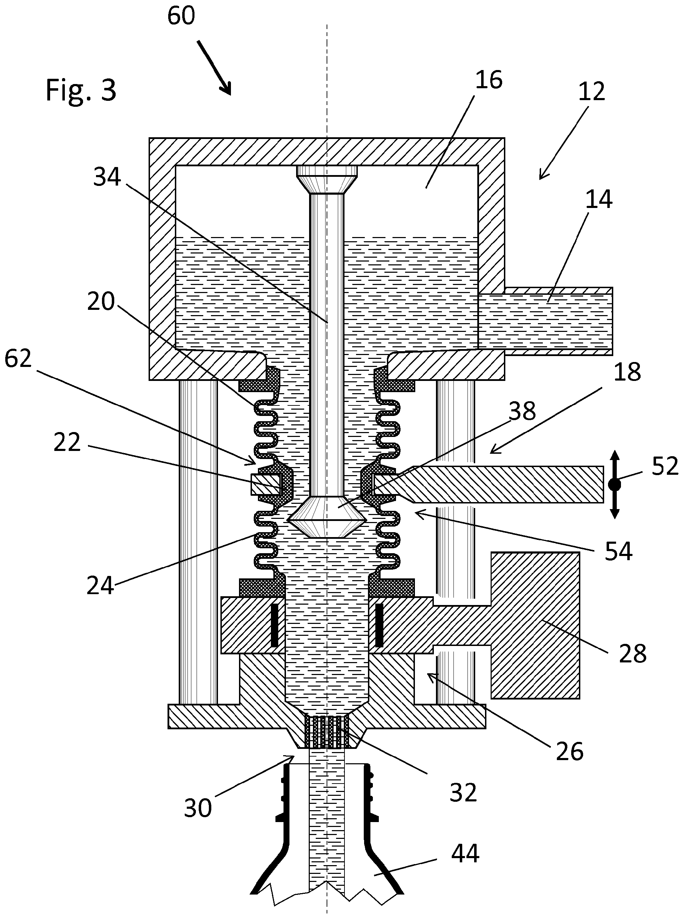

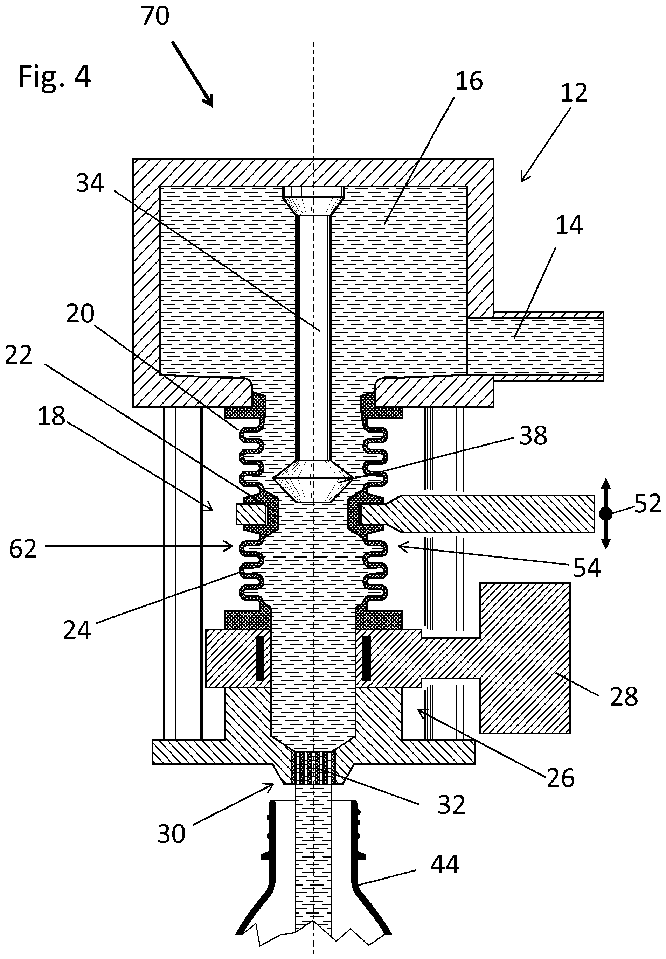

Die Ausführungsform der Fig. 3 ist nahezu identisch zur Ausführungsform der Fig. 2, mit dem Unterschied, dass hier der erste Faltenbalg 20, der Ventilsitz 22 und der zweite Faltenbalg 24 durch ein integriertes flexibles Wandelement 62 gebildet sind. Der Ventilsitz 22 ist hierbei ein Polymerring, der auf einem Betätigungsarm 64 mit einer ringförmigen Ausnehmung 66 eingeformt ist. Die Ausführungsform der Fig. 4 ist zur Ausführungsform der Fig. 3 weitgehend identisch, wobei Fig. 4 lediglich eine andere Stellung des Ventilkörpers 38 relativ zum Ventilsitz 22 zeigt, wie sie in Fig. 2 schraffiert als Ventilkörper 38a gekennzeichnet ist.

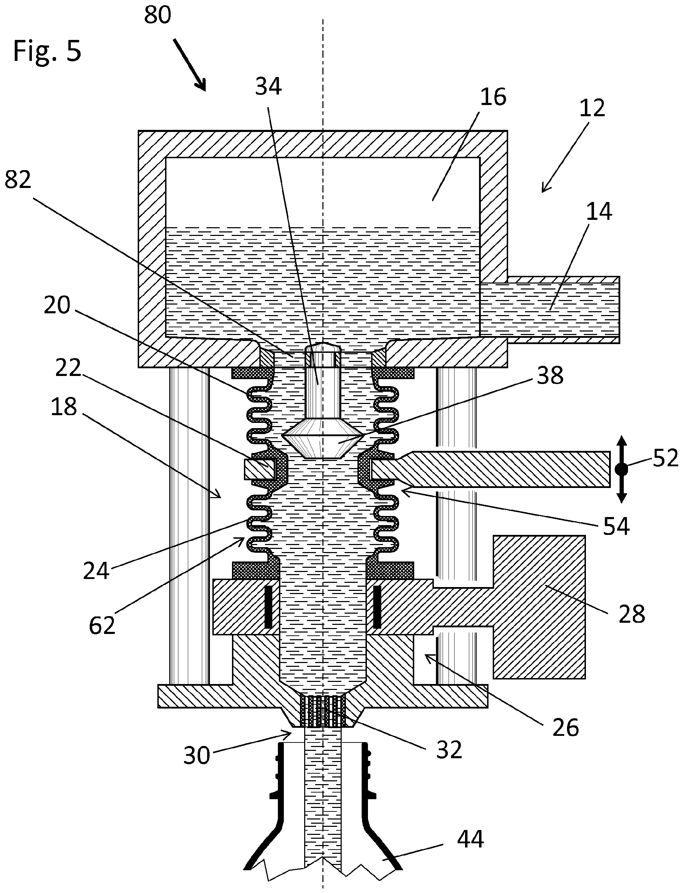

Die Fig. 5 zeigt eine weitere Ausführungsform 80 einer Fülleinrichtung, die weitgehend identisch zur Fülleinrichtung 70 der Fig. 4 ist. Im Unterschied zu Fig. 4 ist hier jedoch die Ventilstange 34 und der Ventilkörper 38 nicht an der Oberseite des Produktraumes 16 befestigt, sondern im Durchlass des Produktraumes 16 zum Produktkanal 18 mittels einer Speichenradhalterung 82. Auf diese Weise ist der Produktraum 16 freier zugänglich, z.B. für Hygienemaßnahmen.

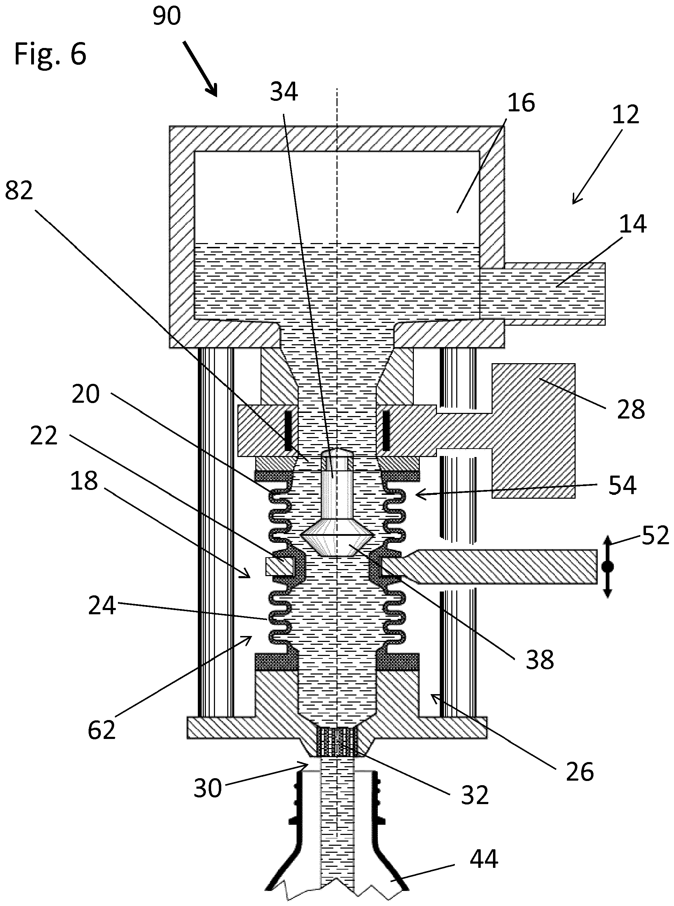

Schließlich zeigt Fig. 6 zeigt eine weitere Ausführungsform 90 einer Fülleinrichtung, die weitgehend identisch zur Fülleinrichtung 80 der Fig. 5 ist. Im Unterschied zu Fig. 5 ist hier jedoch der Durchflussmesser 28 unmittelbar unterhalb des Produktraumes 16 und oberhalb des Ventilkörpers 38 angeordnet und nicht unterhalb dieses Ventilkörpers 38.

Die Erfindung ist nicht auf die oben beschriebenen Ausführungsbeispiele beschränkt, sondern kann innerhalb des Schutzbereiches der beiliegenden Schutzansprüche beliebig variiert werden.

### Bezugszeichenliste

- 10: Fülleinrichtung (erste Ausführungsform)
- 12: Produktzufuhr
- 14: Produktzufuhrkanal
- 16: Produktraum
- 18: Produktkanal
- 20: erster Faltenbalg
- 22: Ventilsitz
- 24: zweiter Faltenbalg
- 26: unterer Produktkanalabschnitt
- 28: magnetisch induktiver Durchflussmesser (MID)
- 30: Abgabeöffnung
- 32: Gassperre
- 34: Ventilstange
- 36: Stellelement des Ventilkörpers
- 38: Ventilkörper
- 39: Füll- und Regelventil
- 40: Druckschraubenfeder
- 42: Anschlagsring
- 44: Behälter (Flasche)
- 50: Fülleinrichtung (zweite Ausführungsform)
- 52: Stellelement des Ventilsitzes
- 54: Füll- und Regelventil (zweite Ausführungsform)
- 60: Fülleinrichtung (dritte Ausführungsform)
- 62: integriertes flexibles Wandelement
- 64: Betätigungsarm
- 66: ringförmige Ausnehmung
- 70: Fülleinrichtung (vierte Ausführungsform)
- 80: Fülleinrichtung (fünfte Ausführungsform)
- 82: Speichenradhalterung

## Patentansprüche

1. Fülleinrichtung (10; 50; 60; 70) zum Abfüllen von Flüssigkeiten, umfassend eine Produktzufuhr (12) und einen mit der Produktzufuhr verbundenen Produktkanal (18), der in eine Abgabeöffnung (30) mündet, wobei in dem Produktkanal (18) ein Füll-und Regelventil (39) angeordnet ist, dem in Fließrichtung des Produkts ein Durchflussmesser (28) nachfolgt oder vorgeschaltet ist, und wobei im Bereich der Abgabeöffnung (30) eine Gassperre (32) angeordnet ist, wobei das Füll- und Regelventil (39) durch einen im Produktkanal (18) angeordneten Ventilkörper (38) und einen diesen umgebenden Ventilsitz (22) gebildet ist, und die Stellung des Ventilkörpers und des Ventilsitzes relativ zueinander steuerbar sind, wobei der Ventilsitz (22) in axialer Richtung des Produktkanals (18) verstellbar ist, **dadurch gekennzeichnet, dass** der Ventilsitz (22) mit dem Produktkanal (18) über beidseitig des Ventilsitzes angeordnete längenverstellbare Verbindungselemente (20, 24) verbunden ist, so dass die axiale Position des Ventilsitzes (22) beliebig gewählt werden kann.

2. Fülleinrichtung (10; 50; 60; 70) nach Anspruch 1, **dadurch gekennzeichnet, dass** die Verbindungselemente durch einen ersten und zweiten Faltenbalg (20, 24) gebildet sind, die einen Teil der Wand des Produktkanals (18) bilden.

3. Fülleinrichtung (10; 50; 60; 70) nach Anspruch 2, **dadurch gekennzeichnet, dass** erste und zweite Faltenbalg (20, 24) aus Teflon oder aus einem Edelstahl bestehen oder damit beschichtet sind.

4. Fülleinrichtung (10; 50; 60; 70) nach Anspruch 2 oder 3, **dadurch gekennzeichnet, dass** die beiden Faltenbalge (20, 24) und der Ventilsitz (22) durch ein integriertes flexibles Wandelement (62) gebildet sind.

5. Fülleinrichtung (10; 50; 60; 70) nach einem der vorhergehenden Ansprüche, **dadurch gekennzeichnet, dass** der Öffnungsquerschnitt des Füll- und Regelventils (39) steuerbar ist.

6. Fülleinrichtung (10; 50; 60; 70) nach einem der vorhergehenden Ansprüche, **dadurch gekennzeichnet, dass** der Durchflussmesser vorrangig durch einen magnetisch induktiven Durchflussmesser (MID) (28) gebildet ist.

7. Fülleinrichtung (10; 50; 60; 70) nach Anspruch 6, **dadurch gekennzeichnet, dass** der Durchflussmesser (28) den Produktkanal (18) umgibt.

8. Fülleinrichtung (10; 50; 60; 70) nach einem der vorhergehenden Ansprüche, **dadurch gekennzeichnet, dass** der Ventilkörper (38) an einer Ventilstange (34) in dem Produktkanal (18) gehalten ist.

9. Fülleinrichtung (10; 50; 60; 70) nach Anspruch 8, **dadurch gekennzeichnet, dass** die Ventilstange (34) am Produktraum (16) befestigt ist.

10. Fülleinrichtung (10; 50; 60; 70) nach einem der vorhergehenden Ansprüche, **dadurch gekennzeichnet, dass** das der Ventilkörper (38) durch einen Ventilkegel gebildet ist.

11. Fülleinrichtung (10; 50; 60; 70) nach einem der vorhergehenden Ansprüche, **dadurch gekennzeichnet, dass** die axiale Stellung des Ventilkörpers (38) in dem Produktkanal (18) steuerbar (36) ist.

12. Fülleinrichtung (10; 50; 60; 70) nach Anspruch 11, **dadurch gekennzeichnet, dass** der Ventilsitz (22) durch eine Feder (40) gegen einen Ruheanschlag (42) vorgespannt ist.

13. Füllmaschine, umfassend eine Vielzahl von Fülleinrichtungen (10; 50; 60; 70) nach einem der vorhergehenden Ansprüche.

14. Füllmaschine nach Anspruch 13, umfassend eine Kulissensteuerung zur Betätigung wenigstens eines Stellelements (36, 52) jeder Fülleinrichtung (10; 50; 60; 70).

15. Füllmaschine nach Anspruch 14, bei der der Ventilsitz (22) und/oder Ventilkörper (38) mit dem Stellelement (36, 52) über ein Betätigungselement verbunden ist, dessen für die Auslenkung des Ventilsitzes/Ventilkörpers (38, 22) wirksame Abmessung in Abhängigkeit von dem Ausgangssignal des Durchflussmessers (28) steuerbar ist.

## Claims

1. Filling device (10; 50; 60; 70) for filling liquids, comprising a product supply (12) and a product channel (18) which is connected to the product supply, which opens into a dispensing opening (30), wherein a filling and regulating valve (39) is arranged in the product channel (18), which, in the flow direction of the product, has a flow meter (28) downstream or upstream of it, and wherein a gas barrier (32) is arranged in the region of the dispensing opening (30), wherein the filling and regulating valve (39) is formed by a valve element (38) arranged in the product channel (18) and a valve seat (22) which surrounds the valve element, and the position of the valve element and the valve seat relative to each other can be controlled, wherein the valve seat (22) can be adjusted in the axial direction of the product channel (18), **characterised in that** the valve seat (22) is connected to the product channel (18) via connection elements (20, 24) which are adjustable in length and arranged on both sides of the valve seat, such that the axial position of the valve seat (22) can be selected as desired.

2. Filling device (10; 50; 60; 70) according to claim 1, **characterised in that** the connecting elements are formed by a first and a second folding bellows (20, 24), which form a part of the wall of the product channel (18).

3. Filling device (10; 50; 60; 70) according to claim 2, **characterised in that** the first and second folding bellows (20, 24) consist of Teflon or a special steel, or are coated with one of these.

4. Filling device (10; 50; 60; 70) according to claim 2 or 3, **characterised in that** both the folding bellows (20, 24) and the valve seat (22) are formed by an integrated flexible wall element (62).

5. Filling device (10; 50; 60; 70) according to any one of the preceding claims, **characterised in that** the opening cross-section of the filling and regulating valve (39) can be controlled.

6. Filling device (10; 50; 60; 70) according to any one of the preceding claims, **characterised in that** the flow meter is preferably formed by a magnetically inductive flow meter (MID) (28).

7. Filling device (10; 50; 60; 70) according to claim 6, **characterised in that** the flow meter (28) surrounds the product channel (18).

8. Filling device (10; 50; 60; 70) according to any one of the preceding claims, **characterised in that** the valve element (38) is held at a valve rod (34) in the product channel (18).

9. Filling device (10; 50; 60; 70) according to claim 8, **characterised in that** the valve rod (34) is secured at the product space (16).

10. Filling device (10; 50; 60; 70) according to any one of the preceding claims, **characterised in that** the valve element (38) is formed by a valve cone.

11. Filling device (10; 50; 60; 70) according to any one of the preceding claims, **characterised in that** the axial position of the valve element (38) in the product channel (18) can be controlled (36).

12. Filling device (10; 50; 60; 70) according to claim 11, **characterised in that** the valve seat (22) is subjected to pretension by a spring (40) against a rest stop (42).

13. Filling machine comprising a plurality of filling devices (10; 50; 60; 70) according to any one of the preceding claims.

14. Filling machine according to claim 13, comprising a link control for the actuation of a positioning element (36, 52) of each filling device (10; 50; 60; 70).

15. Filling machine according to claim 14, wherein the valve seat (22) and/or the valve element (38) is connected to the positioning element (36, 52) by means of an actuating element, of which the effective dimensions can be controlled as a function of the output signal of the flow meter (28), for the purpose of the deflection of the valve seat/valve element (38. 22).

## Revendications

1. Dispositif de remplissage (10 ; 50 ; 60 ; 70) pour transvaser des liquides, comprenant une amenée de produit (12) et un canal de produit (18) relié à l'amenée de produit, qui débouche dans une ouverture de distribution (30), dans lequel est disposé dans le canal de produit (18) une soupape de remplissage et de régulation (39), en aval ou en amont de laquelle est disposé, dans le sens d'écoulement du produit, un débitmètre (28), et dans lequel une barrière à gaz (32) est disposée dans la zone de l'ouverture de distribution (30), dans lequel la soupape de remplissage et de régulation (39) est formée par un corps de soupape (38) disposé dans le canal de produit (18) et par un siège de soupape (22) entourant celui-ci, et la position du corps de soupape et du siège de soupape peuvent être commandées l'une par rapport à l'autre, dans lequel le siège de soupape (22) peut être ajusté dans une direction axiale du canal de produit (18), **caractérisé en ce que**
le siège de soupape (22) est relié au canal de produit (18) par l'intermédiaire d'éléments de liaison (20, 24) ajustables en longueur, disposés de part et d'autre du siège de soupape de telle sorte que la position axiale du siège de soupape (22) peut être choisie de manière quelconque.

2. Dispositif de remplissage (10 ; 50 ; 60 ; 70) selon la revendication 1, **caractérisé en ce que** les éléments de liaison sont formés par un premier et un deuxième soufflet (20, 24), qui forment une partie de la paroi du canal de produit (18).

3. Dispositif de remplissage (10 ; 50 ; 60 ; 70) selon la revendication 2, **caractérisé en ce que** le premier et le deuxième soufflet (20, 24) sont constitués de Teflon ou d'un acier inoxydable ou en sont revêtus.

4. Dispositif de remplissage (10 ; 50 ; 60 ; 70) selon la revendication 2 ou 3, **caractérisé en ce que** les deux soufflets (20, 24) et le siège de soupape (22) sont formés par un élément de paroi (62) flexible intégré.

5. Dispositif de remplissage (10 ; 50 ; 60 ; 70) selon l'une quelconque des revendications précédentes, **caractérisé en ce que** la section transversale d'ouverture de la soupape de remplissage et de régulation (39) peut être commandée.

6. Dispositif de remplissage (10 ; 50 ; 60 ; 70) selon l'une quelconque des revendications précédentes, **caractérisé en ce que** le débitmètre est formé en priorité par un débitmètre magnéto-inductif (MID) (28).

7. Dispositif de remplissage (10 ; 50 ; 60 ; 70) selon la revendication 6, **caractérisé en ce que** le débitmètre (28) entoure le canal de produit (18).

8. Dispositif de remplissage (10 ; 50 ; 60 ; 70) selon l'une quelconque des revendications précédentes, **caractérisé en ce que** le corps de soupape (38) est maintenu sur une tige de soupape (34) dans le canal de produit (18).

9. Dispositif de remplissage (10 ; 50 ; 60 ; 70) selon la revendication 8, **caractérisé en ce que** la tige de soupape (34) est fixée sur l'espace de produit (16).

10. Dispositif de remplissage (10 ; 50 ; 60 ; 70) selon l'une quelconque des revendications précédentes, **caractérisé en ce que** le corps de soupape (38) est formé par un cône de soupape.

11. Dispositif de remplissage (10 ; 50 ; 60 ; 70) selon l'une quelconque des revendications précédentes, **caractérisé en ce que** la position axiale du corps de soupape (38) peut être commandée (36) dans le canal de produit (18).

12. Dispositif de remplissage (10 ; 50 ; 60 ; 70) selon la revendication 11, **caractérisé en ce que** le siège de soupape (22) est précontraint par un ressort (40) contre une butée de repos (42).

13. Remplisseuse comprenant une pluralité de dispositifs de remplissage (10 ; 50 ; 60 ; 70) selon l'une quelconque des revendications précédentes.

14. Remplisseuse selon la revendication 13, comprenant une commande à coulisse pour actionner au moins un élément de réglage (36, 52) de chaque dispositif de remplissage (10 ; 50 ; 60 ; 70).

15. Remplisseuse selon la revendication 14, où le siège de soupape (22) et/ou le corps de soupape (38) sont reliés à l'élément de réglage (36, 52) par l'intermédiaire d'un élément d'actionnement dont la dimension active pour la déviation du siège de soupape/du corps de soupape (38, 22) peut être commandée en fonction du signal de sortie du débitmètre (28).
